# EUROPEAN PATENT APPLICATION

(11) **EP 4 793 178 A1**
(43) Date of publication of application: **19.08.2026**
(21) Application number: 25157829.0
(22) Date of filing: 13.02.2025
(51) Int. Cl.: B64U 50/38, B64U 80/25, B64U 80/30, B64U 80/40, B64U 80/70

(54) **ELECTRO-MECHANICALLY STACKABLE MODULAR DRONE DOCKING STATION**

(71) Applicant: Ecole Polytechnique Fédérale de Lausanne (EPFL), 1015 Lausanne (CH)
(72) Inventor: Erünsal, Izzet Kagan, 1024 Ecublens (CH); Droz, Emmanuel, 1802 Corseaux (CH)
(74) Representative: Vesterinen, Jussi Tapio

(57) **Abstract**

An electro-mechanically stackable docking station (1) is proposed for a drone. The docking station (1) comprises: a housing (8) comprising a door (5); a tray mechanism (6) comprising a tray (6) configured to move between a retracted position, and an extended position; a landing pad (7) on the tray (6) for the drone; a data communication module to allow the docking station (1) to set up a data communication link with the drone (2) and/or with another device; a data processing unit to process data; one or more mechanical coupling features (9) on the housing (8) to allow the docking station (1) to be mechanically coupled to one or more other docking stations (1) on one or more sides of the docking station (1); and one or more electrical connectors (14) and/or inductive pads (49) to allow the docking station (1) to be electrically connected to the one or more other docking stations.

## Description

### TECHNICAL FIELD

The present invention relates to a new electro-mechanically stackable docking station for vertical take-off and landing (VTOL) drones, designed to support autonomous multiple unmanned aerial vehicle (UAV) operations. The proposed docking station features a unique design enabling mechanical and electrical stacking in one or more orientations, allowing seamless scalability and adaptability for various deployment scenarios. The invention also relates to a corresponding modular docking array, and a method for operating the docking station.

### BACKGROUND OF THE INVENTION

UAVs, also known as drones, have experienced a surge in popularity due to their remarkable versatility, operational efficiency, and diverse applications across industries, such as aerial photography, defence, logistics, and infrastructure inspection. Recent advancements in hardware and software technologies have significantly enhanced the autonomy of these vehicles, reducing their reliance on human supervision and enabling increasingly complex and extended missions. To support such autonomous operations, a critical need arises for devices that can recharge the UAVs' energy storage systems while ensuring safe and reliable docking during the charging process. These devices, commonly referred to as drone docking stations, have seen widespread development and successful deployment in various forms.

Drone docking stations serve as more than just charging hubs. For optimal mission performance, they often facilitate additional functionalities, such as remote coordination with the UAV, preprocessing of collected data, and storage between missions. In autonomous operations, drones routinely land on these stations for charging and subsequently take off to continue their assigned tasks. This ability, known as self-charging capability, is pivotal to extending the operational range and duration of UAV systems. Effective communication between the UAV and the docking station is essential to coordinate these processes seamlessly, ensuring both operational efficiency and safety.

While single-UAV systems have proven highly effective in a variety of use cases, they inherently lack scalability for extensive or frequent operations. Multi-UAV systems are increasingly adopted to address these limitations, offering benefits, such as robustness, parallel sensing and actuation, and the potential for continuous operation. These attributes result in enhanced performance over single-UAV configurations in demanding scenarios. However, the reliance on docking stations persists as a critical requirement for sustaining multi-UAV operations, especially in remote or challenging environments.

Existing docking solutions that support multiple UAVs simultaneously have shown promise but are often constrained by limitations in scalability and flexibility. For example, expanding the number of UAVs supported within a mission is typically cumbersome and time-consuming. Moreover, many of these systems lack support for distributed and networked operations, which are essential for autonomous missions requiring dynamic and spatial adaptability, as well as real-time responsiveness. Addressing these challenges necessitates the development of innovative docking solutions that can seamlessly accommodate the growing demands of multi-UAV systems, providing scalable, robust, and flexible infrastructures for autonomous remote operations.

### SUMMARY OF THE INVENTION

It is an object of the present invention to overcome at least some of the problems identified above related to docking stations for UAVs. More specifically, one of the objects of the present invention is to propose a new electro-mechanically stackable distributed docking station for UAVs.

According to a first aspect of the invention, there is provided an electro-mechanically stackable docking station for an unmanned aerial vehicle as recited in claim 1.

Technically, the proposed docking station enhances the operational efficiency and autonomy of an UAV by providing a reliable and scalable self-charging and storing mechanism, thereby reducing downtime of the UAV (possibly enabling full continuous operation) and human intervention. The ability to mechanically stack docking stations allows for flexible deployment in various environments, both indoors and outdoors, while the modular design ensures easy transportation and adaptability to different spatial constraints. The docking station's flexibility in power supply - via external alternating current (AC) or direct current (DC) sources, internal batteries, or solar cells - makes it suitable for both indoor and outdoor deployments under diverse supply conditions. Furthermore, the docking station's capability to electrically connect to and communicate with other docking stations facilitates efficient power distribution and coordination, optimising the performance and longevity of the whole system and adding extra robustness to local failures. Commercially, the proposed docking station can significantly reduce operational costs by minimising manual labour and maintenance requirements. Its versatility and scalability make it ideal for diverse applications across industries such as logistics, agriculture, surveillance, and infrastructure inspection, especially spanning extensive congested areas requiring multi-robot deployments. The ability to work as an individual unit also makes it a good alternative to existing docking stations on the market. Finally, electromechanical components are selected considering the factors of reliability and cost-effectiveness, which further increase its competitiveness as a standalone unit.

According to a second aspect of the invention, there is provided a docking station array comprising a plurality of docking stations mechanically coupled and electrically connected to one another.

According to a third aspect of the invention, there is provided a method of operating a docking station for an unmanned aerial vehicle as recited in claim 14.

Other aspects of the invention are recited in the dependent claims attached hereto.

### BRIEF DESCRIPTION OF THE DRAWINGS

Other features and advantages of the invention will become apparent from the following description of non-limiting example embodiments, with reference to the appended drawings, in which:
- Figure 1 illustrates the proposed docking station in a perspective view showing the main mechanical components of the docking station, where the tray is in an extended position and the door is open;
- Figure 2 illustrates the docking station of Figure 1, but where the tray is in a retracted position and the door is closed;
- Figure 3 is a back view of the docking station of Figure 1;
- Figure 4 is a bottom view of the docking station of Figure 1;
- Figure 5 illustrates the proposed docking station according to another embodiment, in which the docking station comprises inductive power sharing pads to electrically connect the docking station to one or more other dockings stations;
- Figure 6 illustrates a docking station array including a plurality of docking stations electro-mechanically connected one to another;
- Figure 7 is a top view of another docking station array illustrating all possible horizontal expansion configurations for a docking station labelled "A";
- Figure 8 is a front view of yet another docking station array showing all possible vertical expansion configurations for a docking station labelled "A";
- Figure 9 is a block diagram showing a system composition of the docking station illustrating various subsystems and modules;
- Figure 10 illustrates a female pin joint used in the docking station for mechanical coupling;
- Figure 11 illustrates a male pin joint configured to engage the female pin joint of Figure 10;
- Figure 12 illustrates a clamp joint used in the docking station for mechanical locking of two adjacent docking stations;
- Figure 13 illustrates a landing pad including a charging pad and an electromagnetic lock;
- Figure 14 shows an example docking station network illustrating an example operation scenario involving docking stations, drones, tasks, a ground control unit, and a cloud server;
- Figures 15a and 15b are a flowchart summarising the process of operating a docking station according to an example of the present invention;
- Figure 16 is a flowchart summarising the process of initialising the docking station;
- Figure 17 is a flowchart describing the process of allocating tasks and docking stations to UAVs;
- Figure 18 is a flowchart describing the process of undocking an UAV; and
- Figure 19 is a flowchart describing the process of docking an UAV.

### DETAILED DESCRIPTION OF EMBODIMENTS OF THE INVENTION

Some embodiments of the present invention will now be described in detail with reference to the attached figures. As utilised herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." Furthermore, the term "comprise" is used herein as an open-ended term. This means that the object encompasses all the elements listed, but may also include additional, unnamed elements. Thus, the word "comprise" is interpreted by the broader meaning "include", "contain" or "comprehend". It is to be noted that the use of words "first", "second" and "third", etc. may not imply any kind of particular order or hierarchy unless this is explicitly or implicitly made clear in the context.

As illustrated in the figures, the present invention presents a novel electro-mechanically stackable distributed docking station 1 designed to accommodate at a time a single vertical take-off and landing (VTOL) UAV 2, referred to as a drone, for multiple functions, including charging, storage, transportation, data exchange, and/or diagnostics. It is to be noted that in the present description, the word "stackable" is to be understood broadly. This means that the stacking operation can be implemented in any direction, in particular in a first direction, which may be a horizontal direction, and/or in a second, orthogonal direction, which may be a vertical direction assuming the docking station is placed on a horizontal or substantially horizontal surface. The unique feature of electro-mechanical stackability in both horizontal and vertical spatial directions allows a plurality of these docking stations to form a flexible, cooperative, and rigid docking array or system 3. This array, including any number of docking stations, is capable of supporting the operations of multiple drones 2 efficiently and adaptively.

The invention leverages electrical stackability to enable seamless extension of power and communication networks across interconnected docking stations within the array. This ensures that each docking station can share power and data with neighbouring stations, fostering integrated operation and enhanced scalability. Meanwhile, mechanical stackability firmly and securely connects each docking station to its respective adjacent station(s), providing structural stability, faster transportation, and robust operation under diverse environmental conditions.

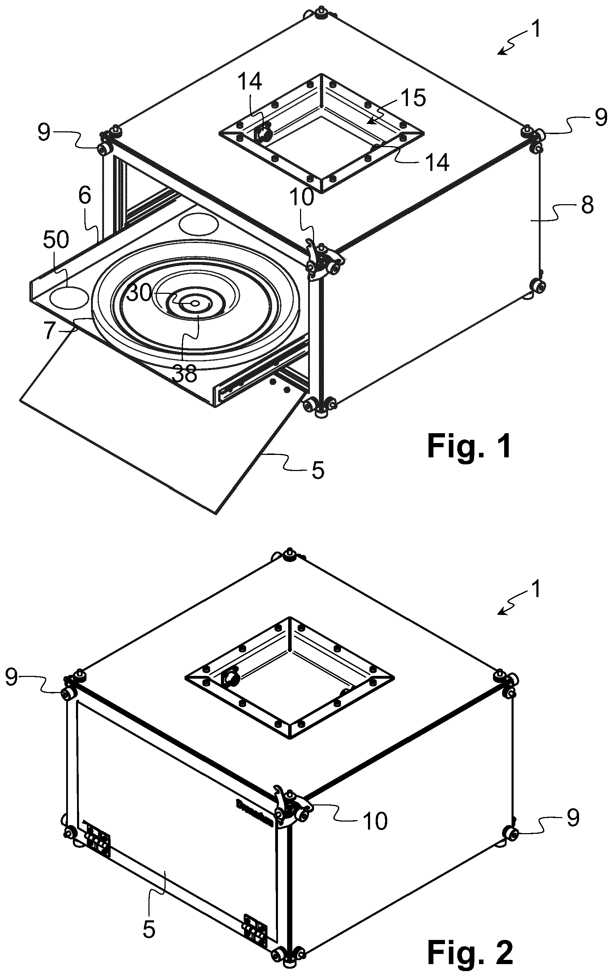

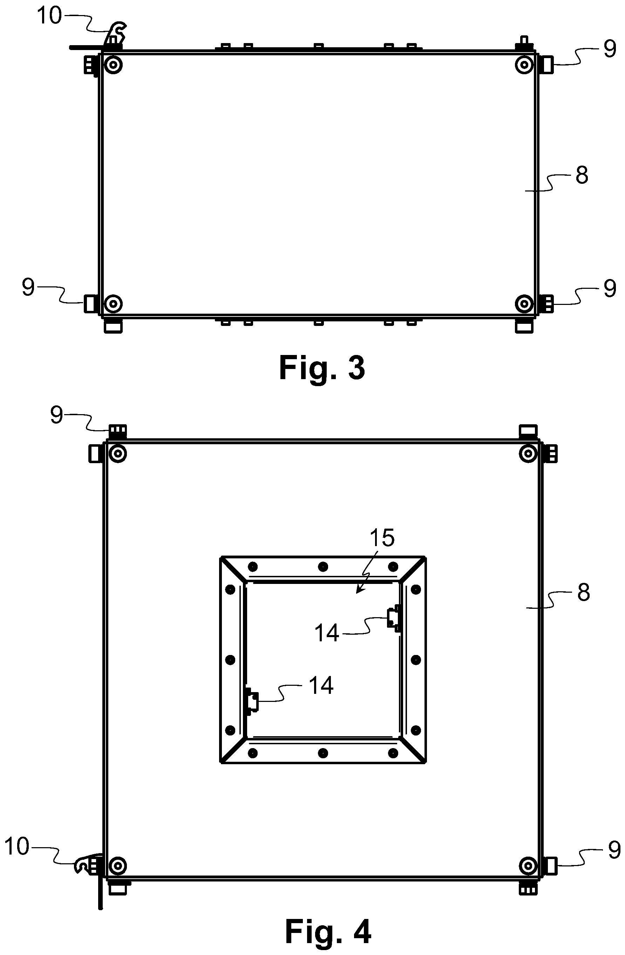

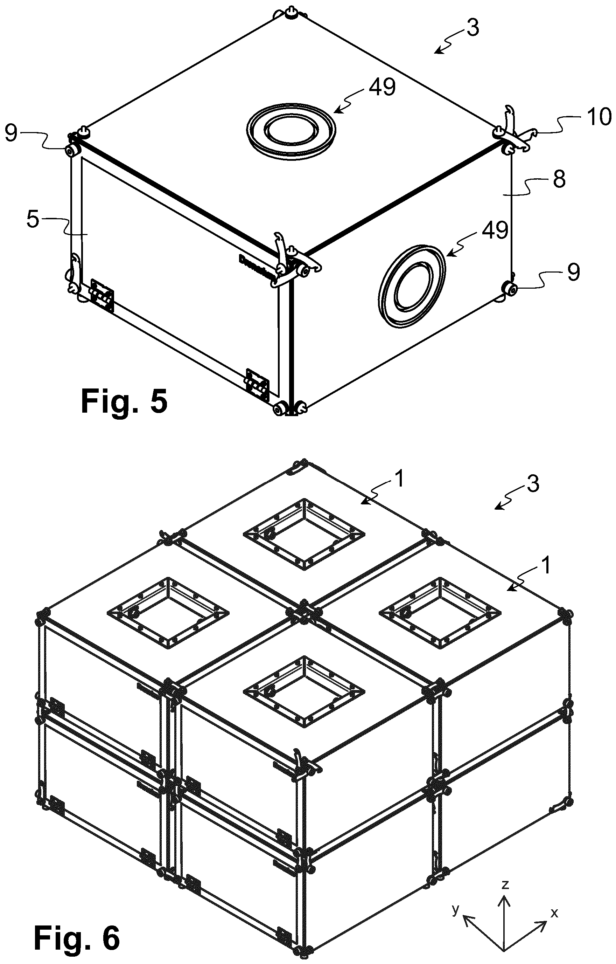

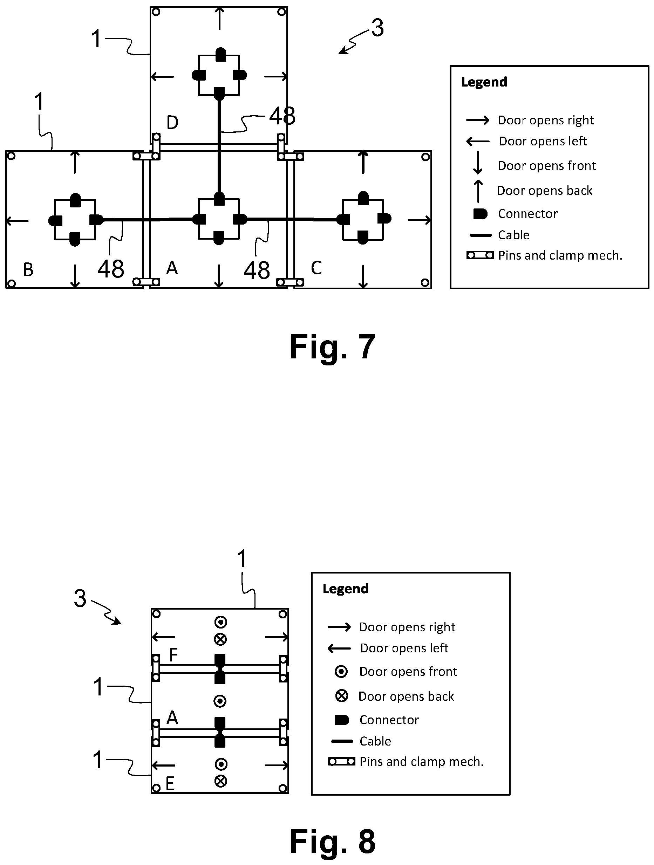

Additionally, the invention supports distributed operations by enabling multiple individual docking stations 1 as shown in Figures 1 to 4, or arrays 3 in different spatial locations to connect to a unified operational network 4 generated by these devices and optionally by other devices. The non-limiting example of Figure 6 shows one modular docking array 3 or system consisting of eight docking stations 1. Figure 7 is a top view of another docking station array illustrating all possible horizontal expansion configurations for a docking station labelled "A". The neighbour docking stations are labelled as B, C, and D. Figure 8 is a front view of another docking station array 3 showing all possible vertical expansion configurations for a docking station labelled "A". The neighbour docking stations are labelled as E and F.

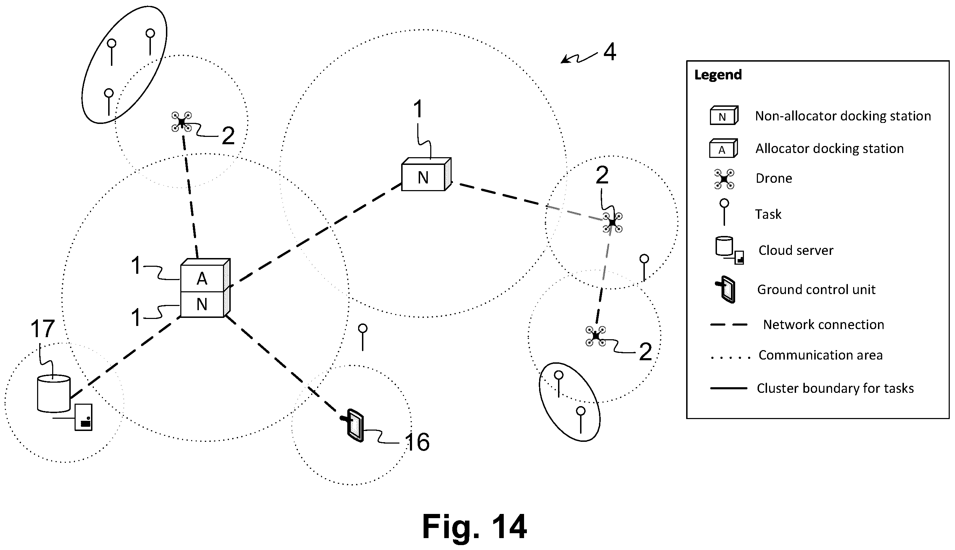

An example shared network 4 as shown in Figure 14 integrates docking stations 1, docking arrays 3, drones 2, a ground control unit 16, and a cloud server 17 facilitating real-time communication and coordination. Through this interconnected system, the network 4 enables distributed cooperative control, allowing each unit of the network to exchange critical operational information dynamically. This capability enhances the scalability, flexibility, and robustness of multi-drone operations, making the system well-suited for complex and high-demand applications.

The present invention addresses the limitations of traditional docking stations by offering a highly adaptable, scalable and networked solution, ideal for autonomous and remote multi-drone missions. Its design allowing modular docking station arrays ensures ease of deployment, reconfiguration, and transportation, significantly advancing the state of the art in drone docking technologies.

Figure 1 shows the docking station 1 in an open or partially open configuration or state, whereas Figure 2 shows the docking station in a closed configuration or state. In the open state, a front door or panel 5 of the docking station is open to allow a tray 6 of the docking station 1 to be extended. The tray 6 is configured to accommodate a landing pad 7 for the drone as will be explained in more detail later. In Figure 1, the tray 6 is shown in a partially extended state. The docking station 1 comprises a housing 8, which in this example is substantially rectangular, to protect the drone if it is stored inside the housing. When the door is closed, the housing forms a closed space inside it, which may be a sealed or substantially sealed space. One or more coupling features or mechanisms 9 are provided on the outer surface of the housing on one or more sides of the housing to mechanically couple the docking station to one or more other docking stations as will be explained later in more detail. The one or more coupling features collectively form a coupling arrangement. One or more locking features or mechanisms 10 are also in this example provided on the outer surface of the housing to lock the docking station to the one or more other docking stations once a mechanical coupling has been made. The one or more locking features collectively form a locking arrangement.

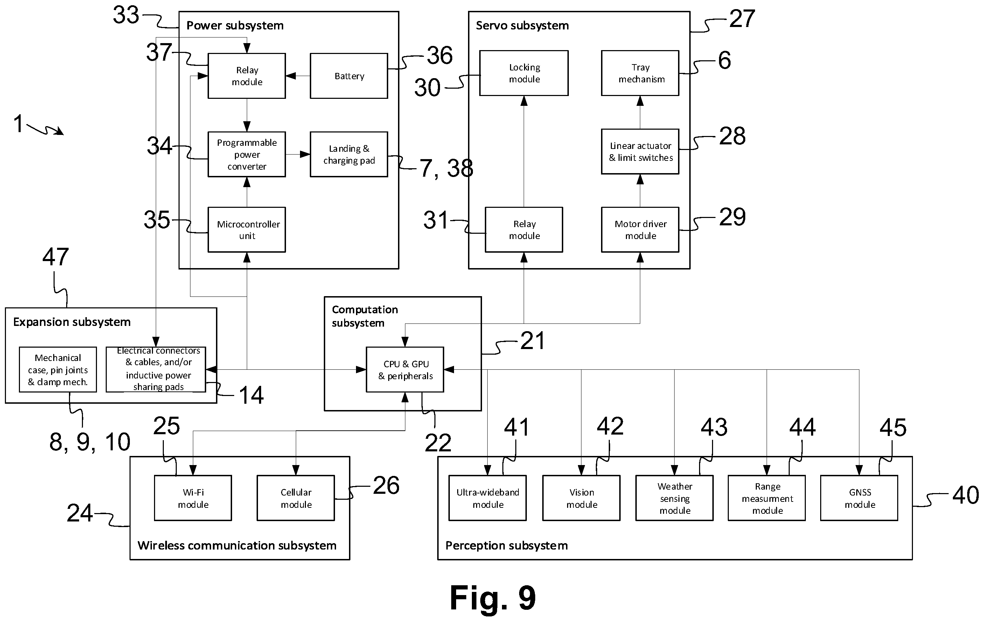

The docking station 1 comprises six subsystems, as depicted in Figure 9, where interaction among them is also shown. The key characteristics of each subsystem are detailed in the following sections. It is noteworthy that some of the subsystems may use market-available hardware and/or software technologies, ensuring reliability and ease of integration.

### A. Computation subsystem

The computation subsystem 21 serves as a central controller, orchestrating the operation of all other subsystems via wired robust serial communication lines, such as CAN-Bus lines. It also coordinates interaction with other docking stations, drones, the ground control unit 16 and the cloud server 17. This subsystem includes a data processing module 22 including a central processing unit (CPU) for executing coordination tasks, an integrated graphics processing unit (GPU) for parallelised operations, such as vision processing for the diagnostics of the drone, and peripherals for data storage and wired communication with other subsystems. These components ensure efficient real-time processing and robust coordination capabilities.

### B. Wireless communication subsystem

The wireless communication subsystem 24 or a data communication module facilitates seamless communication between the CPU and external units, including drones, remote docking stations, cloud-based servers and/or ground control units or terminals. It integrates a short-range wireless communication module 25, which in this example is a Wi-Fi module for short-range, high-throughput data transfer, and a cellular module 26 for long-range, lower throughput communication. This dual-module configuration provides a balanced approach to meet varying range and throughput requirements, ensuring robust and adaptable mission execution.

### C. Servo subsystem

The servo subsystem 27 manages the servo operations of the docking station 1. It is responsible for actuating the tray mechanism 6 using a linear actuator and limit switches 28 together with a motor driver 29, as well as securing the drone to the landing pad 7 placed on the tray 6 via an electro-permanent magnet controlled locking mechanism or system 30 controlled by a relay 31. Commands from the computation subsystem 21 dictate these operations. The motor driver 29 supports diverse motion profiles for precise control of the tray mechanism 6 with the help of limit switches 28. Additionally, the electro-permanent magnet 30 requires only a short voltage pulse to change its polarity, eliminating the need for continuous voltage application and reducing power consumption. Note that when the tray 6 extends, it also opens the hinged door 5 supported by torsional springs.

### D. Power subsystem

The power subsystem 33 in this example integrates a programmable power converter (PPC) 34, a microcontroller unit (MCU) 35, one or more internal power storage units or batteries 36, a relay module 37, and a charging pad 38, which is assembled onto the landing pad 7. The MCU 35, under commands from the CPU 22, toggles the relay 37 to switch between external power sources and the internal power storage 36. **It** also generates charging or discharging profiles, which are applied by the PPC 34 to the charging interface of the charging pad 38. Depending on the charging type - inductive or conductive - the power subsystem 33 dynamically adapts to ensure efficient energy transfer. This design supports reliable power management for autonomous operations. The power subsystem 33 has direct input from / output to all other subsystems, but this is not shown in Figure 9 for simplicity.

### E. Perception subsystem

The perception subsystem 40 ensures safe operations for drone landing, take-off, and docking. It incorporates an ultra-wideband (UWB) module 41 with UWB anchors to assist drones equipped with UWB tags in measuring their relative displacement or position with respect to the docking station 1 for precise positioning. A vision module 42 is employed to monitor docked drones, enabling diagnostics and confirming proper docking. A weather sensing module 43 measures environmental parameters, such as temperature, humidity, pressure, and/or wind speed, to assess the safety of mission execution. Additionally, a range measurement module 44 calculates the vertical distance from the tray 6 in its extended position to objects above the tray, ensuring safe take-off conditions. There is also provided a global navigation satellite system (GNSS) module 45 that is configured to compute its geolocation if this information is available, i.e., if the GNSS module is able to receive sufficient information from a plurality of satellites.

### F. Expansion (stacking) subsystem

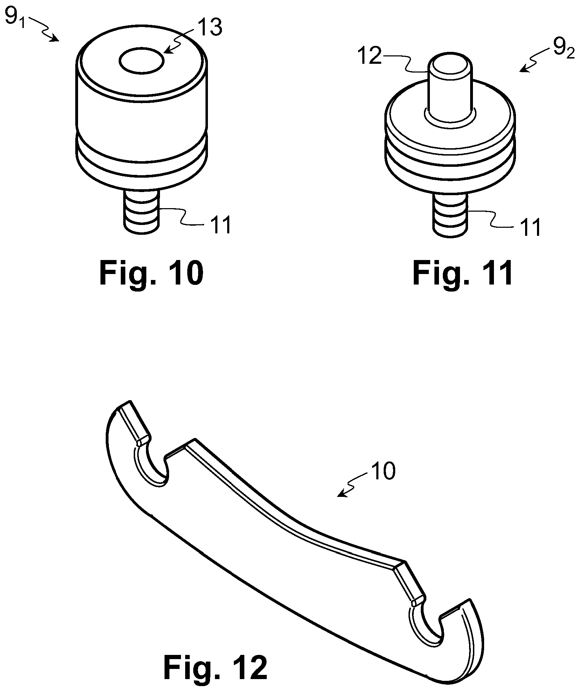

The expansion or stacking subsystem 47 represents some of the core innovative aspects of the docking station 1, enabling electro-mechanical assembly with other stations to form a docking array or system 3 as shown for instance in Figure 6. According to this example, each docking station of the array has a rectangular prism-shaped case or housing 8 and supports adaptable or flexible stacking or expansion in horizontal directions (front, back, right, and/or left) and vertical directions (up and/or down). This is achieved by using the coupling arrangement as explained above together with the locking arrangement. In this example, the coupling arrangement includes a set of female joints 9₁ and male pin joints 9₂ as shown in Figures 10 and 11, respectively, while the locking arrangement includes a set of clamp joints, which in this example are rotational clamp joints as better illustrated in Figure 12. As can be seen in Figures 10 and 11, the female and male joints in this example include a threaded shaft 11 that is configured to be screwed, and thus threadedly engaged in a respective hole of the housing, which is preferably pre-threaded. The pin 12 of the male pin joint is configured to engage in a form-fit or press-fit manner the corresponding hole 13 of the female joint. In this case as shown for example in Figure 1, at each corner or vertex of the docking station 1, three orthogonally oriented pin joints are provided. The selection of male or female joints depends on the configuration of the adjacent docking station and thus the male and female pin joints can be hot-swapped to accommodate the selected configuration. Thus, the pin joints (or other coupling features) are removably affixed or fastened to the housing. The number of pin joints (or other coupling features) on a respective surface of the docking station can be increased or decreased if necessary to have a more rigid fit with a neighbouring docking station. When two docking stations are stacked, one top of the other or one next to the other, the pin joints ensure precise alignment and restrict relative movement in lateral directions, while the locking mechanism 10 restricts movement along the stacking axis defined by the male joint extension direction, creating a rigid assembly.

From an electrical perspective, the stacking subsystem 47 integrates a set of electrical connectors 14 for electrically connecting the docking station 1 to one or more other docking stations by means of cables 48, which are optionally flexible. In this example, the electrical connectors are provided inside cavities or recesses 15 of the housing 8. More specifically, in this example, two asymmetrically placed electrical connectors are provided inside a cavity of the top surface and two asymmetrically placed electrical connectors are provided inside a cavity of the bottom surface. The optional asymmetrical placement of the electrical connectors has the advantage that more space can in this manner be provided for the cables. One single electrical connector can be used for power and data transfer. The above-described configuration allows docking stations to share power and establish a wired communication network within a docking station array using a single external power source. Alternatively, or in addition, electrical power connection to neighbouring docking stations can be made by means of inductive power (and data) sharing pads 49 placed on one or more surfaces of the docking stations as shown in Figure 5. These inductive pads 49 include both the primary and secondary coils to charge the neighbouring docking station or to be charged by it. In this example, these coils inside the respective charging pad are assembled in a concentric manner, where the primary coil (transmitter) has an annular shape and the secondary coil (receiver) has a disk shape, or vice versa. In this example, data and power are shared wirelessly. Additionally, a housing around the respective charging pad 49 may be provided to isolate it from environmental effects when it is connected to neighbouring docking stations.

The design supports both centralised and distributed control architectures. In a centralised control architecture, any docking station in the array can manage the operations of the others, providing streamlined coordination and efficient command execution. In a distributed control architecture, each docking station autonomously manages its own operations while communicating and cooperating with neighbouring stations. This distributed approach enhances fault tolerance and facilitates modular scalability, allowing new stations to be added seamlessly without disrupting the existing network. The expansion subsystem's innovative integration of mechanical and electrical stacking capabilities significantly enhances flexibility, scalability, and operational reliability, making it adaptable for a wide range of deployment scenarios.

The features of the docking station 1 can be classified into two main categories: individual features and group features. This classification provides a clear understanding of the invention's capabilities as a standalone unit and as part of a docking array 3.

### A. Individual features

### 1) Features supporting take-off and landing:

Each docking station 1 can control its tray mechanism 6 to move the tray in forward and backward directions using the motor driver 29 in connection with the linear actuator and limit switches 28. This movement facilitates drone take-off, landing, and docking. Take-off and landing are performed when the tray 6 is in the fully extended position, while docking is achieved when the tray 6 is fully retracted.

The tray 6 and/or the top surface of the docking station 1 may include locations to attach fiducial markers 50, such as QR codes, to facilitate the landing and take-off.

The tray mechanism 6 is integrated with the door 5 supported by torsional springs on its hinges. When the tray extends, it applies a linear force that opens the door. As the tray retracts, the door closes automatically under the torque applied by the torsional springs, eliminating the need for additional actuation components.

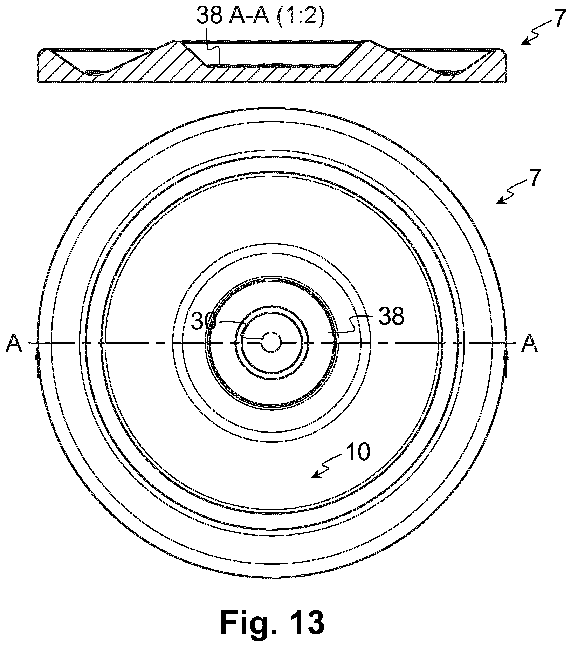

As shown in Figure 13, the profiled surface of the landing pad 7 is preferably designed to match the bottom surface profile of the drone, compensating for any misalignment during the landing operation. The landing pad may be removably coupled to the tray 6 enabling easy replacement to accommodate drones with different configurations and shapes. For example, the landing pad 7 may be attached to the tray 6 using magnetic joints and/or in a form-fit or press-fit manner. Alternatively, or in addition, clips may also be used for this purpose. Embedding the charging pad 38 and the electromagnetic lock 30 within the landing pad creates an innovative all-in-one solution that seamlessly integrates critical functionalities.

### 2) Features supporting charging and discharging:

Each docking station 1 can preferably independently connect to an external AC or DC power source (not shown in the figures) through the connectors 14 located inside the respective cavities 15, which in the present example are at the top and bottom surfaces of the docking station 1, ensuring compatibility with diverse power infrastructures. The docking station 1 can charge or discharge the drone's power storage unit 36 through the charging pad 38 embedded in the landing pad 7. Charging can be performed conductively or inductively, depending on the deployed charging circuitry. Using the CPU, MCU, and PPC, the docking station 1 can apply optimised charging, discharging, and balancing profiles tailored to different battery chemistry, such as Li-Po and Ni-Cd, improving energy efficiency and prolonging battery life. The power storage unit 36 and/or optional one or more backup batteries within the docking station 1 and/or one or more solar cells placed e.g. on one or more outer surfaces of the docking station provide power in case of temporary external power loss. This transition is managed by the CPU 22 through the MCU 35 and relay module 37, ensuring uninterrupted operation of all subsystems.

### 3) Features supporting storage and transportation:

The docking station 1 is capable of securely storing a drone in both indoor and outdoor environments. When the tray 6 is in the retracted position, the docking station seals off external elements, protecting the drone and internal components from environmental factors. Temperature may optionally be controlled by using optional heating and/or cooling elements inside the docking station. The docking station 1 can be mounted on walls, stationary platforms, or mobile (flat) surfaces, allowing flexible deployment in various operational environments.

An electro-permanent magnet 30 is integrated into the landing pad 7, in this example into the centre region of the landing pad, to secure the drone in place during docking. This magnet is activated upon landing and interfaces with permanent magnets placed on the bottom part of the drone, in this example on the centre-bottom part of the drone, ensuring reliable attachment or fixation of the drone onto the landing pad during the docking process and/or while being stored inside the housing. Alternatively, the drone may comprise an electro-permanent magnet and the landing pad may comprise a permanent magnet. Additionally, or alternatively, one or more passive locking elements, in particular mechanical locking elements, may be used to secure the drone to the docking station, and in particular to the landing pad, when docked.

The docking station 1 may optionally be equipped with a mechanical handle on at least one of its outer surfaces, such as on the top surface, and/or wheels, which may be detachable, on its bottom surface. These components allow easy transportation, with the handle and wheels designed for quick attachment and removal depending on transportation needs.

### 4) Features enabling wireless data exchange:

Each docking station 1 can wirelessly communicate with compatible drones, other docking stations, other docking arrays, ground control units, and/or cloud servers in a full-duplex configuration using Wi-Fi (and/or another wireless local area network protocol) and/or one or more cellular networks within its operational communication range. When cellular connectivity is available, the docking station 1 can upload and download data from a cloud server 17, enabling remote monitoring, control, and data synchronisation. The docking station can thus perform edge computing and store data. Each docking station 1 can route information from neighbouring devices, including drones, other docking stations, and ground control units. This capability establishes a mesh network 4, enhancing communication redundancy, scalability, and reliability for collaborative operations.

### 5) Features relating to sensing weather:

A weather sensing module 43, which is compatible with a wired communication protocol, may be added to any docking station 1 or docking array 3. Any one of the electrical connectors (giving power to the module and enabling data exchange) 14 may be used to connect the weather sensing module to the docking station. The weather sensing module 43 is able to measure any one of the following parameters by using its corresponding sensor: outside/inside temperature, humidity, pressure, and wind speed.

### B. Group features

### 1) Features enabling mechanical assembly with other docking stations:

Multiple docking stations 1 can be stacked and secured both vertically (up and/or down) and/or horizontally (right, left, front, and/or back) using the coupling arrangement, which in this example comprises a set of threaded male and female pin joints combined with the locking arrangement, which in this example comprises a set of rotational clamp joints. This configuration enables the formation of a docking array with precise alignment between neighbouring docking stations. The stacking mechanism restricts relative movement between adjacent docking stations in all translational and rotational directions, ensuring structural rigidity and stability of the docking array 3.

### 2) Features enabling electrical assembly:

Multiple docking stations 1 can be electrically interconnected for both power distribution and data communication through flexible cables 48 connected to the connectors 14 of the docking stations, which in this example are located inside the cavities 15 of the top and bottom surfaces of each docking station 1. By housing the connectors within a recessed cavity, the design minimises the risk of physical damage during docking or transportation. Additionally, this arrangement facilitates the precise alignment of docking stations, preventing interference with the mechanical stacking mechanism. Alternatively, as mentioned above, electrical interconnection can be achieved by means of inductive pads. The electrical connection establishes a communication bus in a full-duplex mode, allowing data transfer between all docking stations 1 within the docking array 3. This bus is seamlessly integrated with the wireless mesh network 4, creating a hybrid communication framework as explained below. The power-sharing capability ensures that the entire docking array 3 requires only a single external power source, with each station dynamically distributing power to other stations as needed.

### 3) Features enabling hybrid networked control:

Various types of devices connected through wired and/or wireless communication techniques form a robust mesh network 4 as shown in Figure 14. These devices may include any combination of one or more drones 2, one or more individual docking stations 1, one or more docking arrays 3, one or more ground control units 16, and, when cellular connectivity is available, one or more cloud servers 17. An example operation scenario comprising three docking stations 1 and three drones are shown in Figure 14, where all devices form a mesh network 4 for an efficient operation. The communication area as shown in Figure 14 is usually a spherical area where data communication can take place reliably. It is usually defined by a radius or range of communication. The hybrid networked control framework aims to coordinate task assignments and docking operations for drones efficiently in a cooperative manner. This method is called a hybrid method because the task and docking station allocations are in this example performed in a dynamical centralised way, and local operations, such as cooperating with drones to allow landing, take-off and charging are performed in a distributed fashion, i.e., directly communicating with drones.

A respective docking station 1 and drone within the mesh network broadcasts its status at a configurable (broadcast) frequency, optionally periodically. The status of a docking station may include any of the following information: identity (ID) of the docking station, position in a three-dimensional (3D) space, its battery charge level (0-100%), operational mode (error, pre-operation, operation), allocator status (true or false), ID of the drone assigned to the docking station, operational state (idle, docking, undocking), mechanical state (tray open, tray closed) and error code. The drones may include any of the following information in their status: ID of the drone, position and/or velocity in 3D space, its battery charge level (0-100%), operational mode (error, pre-operation, operation), ID of the docking station assigned to the drone, ID(s) of the task(s) assigned to the drone, optionally together with a flag indicating whether or not the task has been completed, operational state (docking, undocking, docked, task-performing), and error code. All devices maintain a synchronised list of network members and their respective statuses, facilitating real-time situational awareness and decision-making. The IDs mentioned above may take the following form: "class ID + object ID" to differentiate all devices. The class IDs may be used to distinguish different device categories or types (e.g. drones and dockings stations) from each other, while the object IDs may be used to distinguish different devices from each other within a given device category or type.

Tasks are generated by a user via the ground control unit 16 (onsite or remotely) or via the cloud server 17 (remotely) and broadcast preferably to the entire network 4. The word "user" in the present context is to be understood broadly. In particular, the word "user" comprises a human user, a digital user or agent, or a robot. Thus, a given event taking place in the network could trigger one or more tasks. For instance, an alarm emitted by an internet of things (IoT) to the cloud server could generate one or more tasks. The tasks may include any of the following status information: The task position and velocity (for moving tasks) in a 3D space, date and time, priority (e.g. on a scale from 0 to 100), estimated time duration required to complete the task (e.g. in minutes), completion status (completed/uncompleted), category of the task (tracking, mapping, surveying, etc.). It is to be noted that it is possible to include only some of the above information in the respective status information. In this example, all drones monitor and respond to available task announcements or advertisements, creating a consensus-driven system for task execution. More specifically, the user and/or the cloud server can generate and announce (i.e., broadcast) tasks anytime during the mission and this information includes the task status, as explained above. Then, the allocator listens, collects, and optionally filters (i.e., clusters) these tasks, and broadcasts available (clustered) tasks and docking stations to the drones (auctioning). Then the drones bid for these tasks and docking stations (bidding). Then the allocator decides which drones win which task(s) and docking station and announces the winners.

Within the mesh network 4, a docking station 1 may declare itself as the allocator if no other station is assigned this role. The allocator is the docking station with the highest pre-assigned priority determined in this example before deployment of the docking station. However, it is possible to adjust these priorities later. The network 4 is also robust to failures in the allocator docking station because any other docking station with the highest priority can assign itself as the allocator if there is no allocator present in the network 4.

The network 4 implements a market-based task allocation strategy to assign tasks and docking stations to drones. First, if necessary, the allocator docking station collects and optionally applies clustering to the available tasks (announced previously by the user and/or cloud server) and then broadcasts descriptions of the tasks as clustered or unclustered (if no clustering was applied) and information about the docking stations in the network (auctioning). Clustering may be applied to the available tasks to improve efficiency depending on their relative distances and complexity, i.e., estimated time to be completed. Clustering in this context means that a plurality of tasks are bundled together to be completed one after the other by one single drone. Subsequently, the allocator listens to the bids sent by the drones within a predefined time window for the available tasks and docking stations (bidding). These bids also include a cost function value, which may depend on any of the following information: drone location, task location, nearby docking station location, battery status, task complexity, task priority, current workload of the drone, and docking station availability. The exact structure of the function depends on task requirements. After the allocator has received the answers from the drones, it decides who wins what and then broadcasts information about the winners in the network. In other words, the available tasks and docking stations are then allocated or assigned to the drones that send lowest (or highest depending on the implementation) cost function value in their bids to optimise efficiency. This information is broadcast in the network 4 upon completion of the allocation.

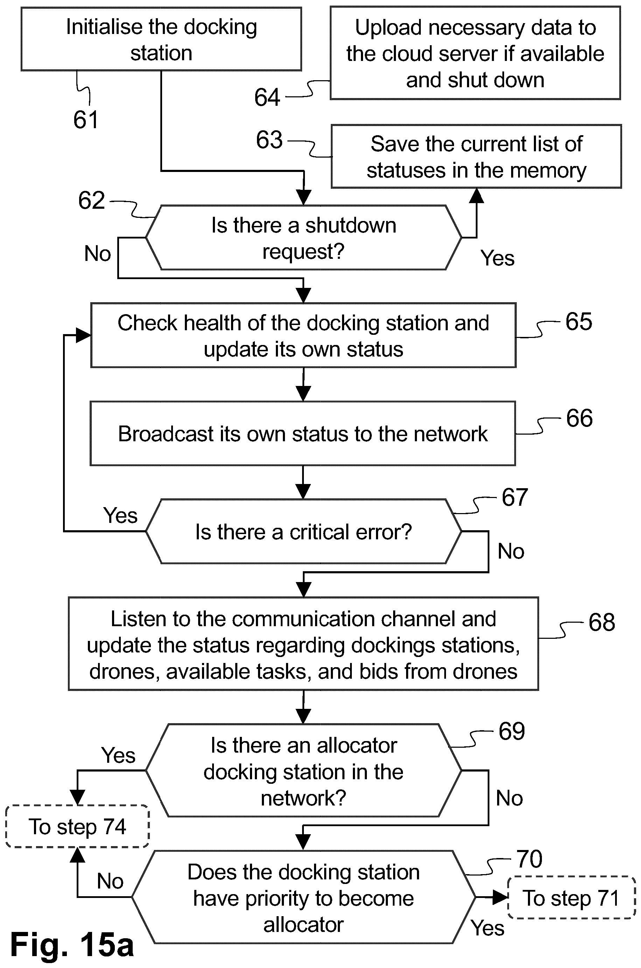

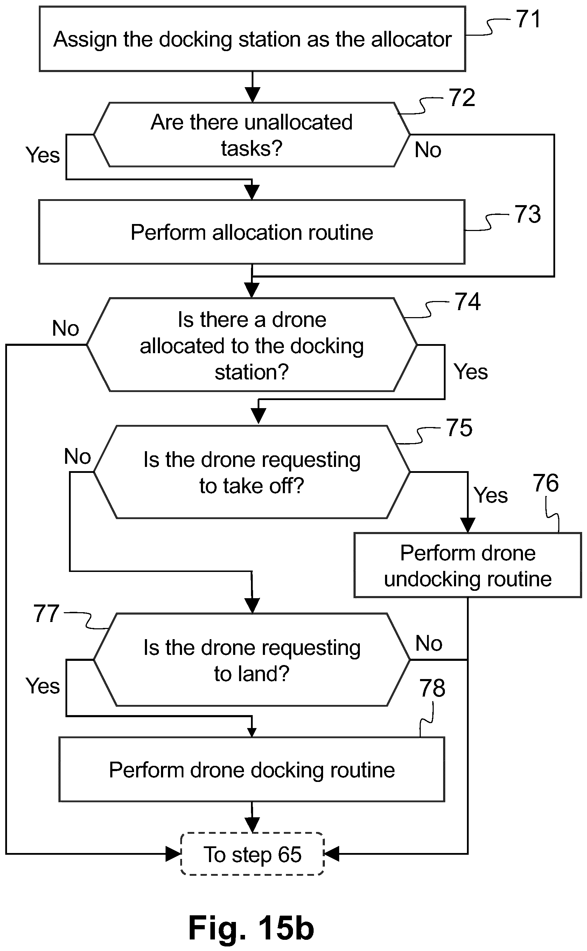

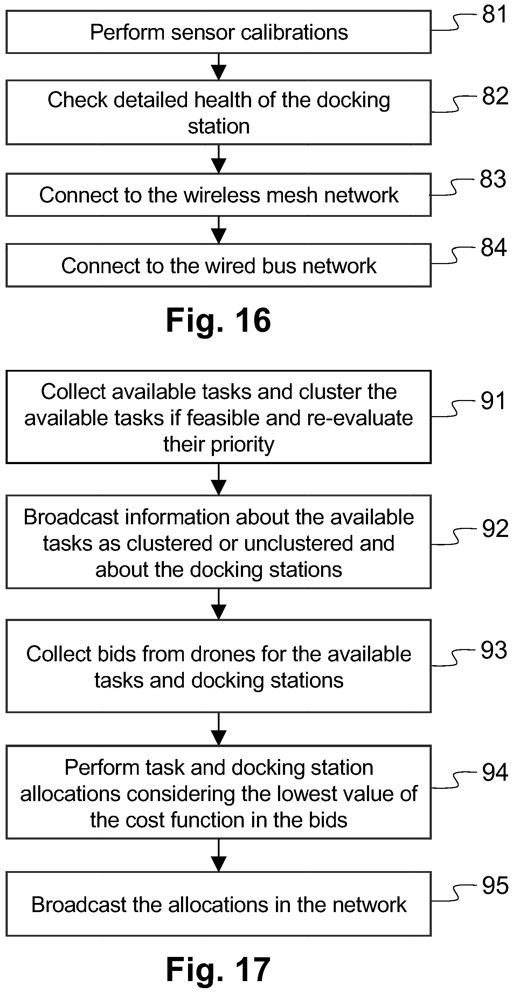

Details of a hybrid control algorithm running in each docking station 1 are given in the flowcharts of Figures 15a, 15b and 16 to 19. The flowcharts of Figures 15a and 15b illustrate the main routine or procedure to be carried out by any docking station 1 in the network 4. In step 61, the present docking station is initialised. This process is described in more detail in the flowchart of Figure 16. In step 62, it is determined whether or not there is a request (received from the user) to shut down the docking station 1. In the affirmative, the process continues in step 63, where the current status list of the docking station is saved in the memory. In step 64, this status list and optionally other data are uploaded to the cloud server if the cloud server is accessible and the docking station is subsequently turned off. The status list may include status information of the present docking station, other docking stations, and drones in the network 4.

If in step 62 it was determined that no shutdown request has been received, then the process continues in step 65, where the health of the docking station is checked, and the status of the docking station is updated based on the health check. In step 66, the docking station 1 broadcasts its status across the network 4. In step 67, the docking station 1 determines whether or not a critical error has been detected in the docking station 1. In the affirmative, the process continues in step 65. If no error is detected, then the process continues in step 68, where the docking station listens to the communication or broadcast channel and updates the status regarding other docking stations, drones, available tasks, and bids from the drones in the network.

In step 69, it is determined whether or not there is an allocator docking station in the network 4. If there is no allocator docking station, then the process continues in step 70, where it is determined whether or not the present docking station 2 has priority to become allocator. In the affirmative, then process continues in step 71, where the docking station 2 assigns or designates itself as the allocator. It is to be noted that in the present example, there is only one allocator docking station in the network 4. In step 72, the docking station determines whether or not there are any unallocated tasks in the network 4. In the affirmative, the process continues in step 73, where allocation routine is run as illustrated in more detail in the flowchart of Figure 17. If there are no unallocated tasks, then the process continues in step 74.

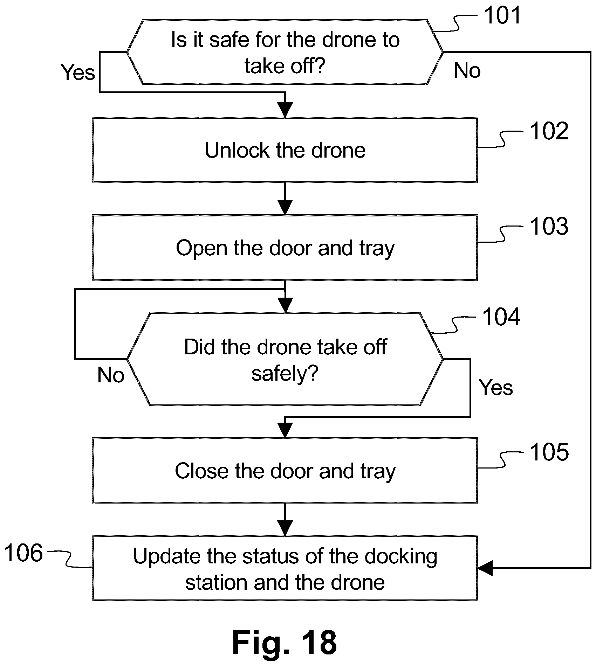

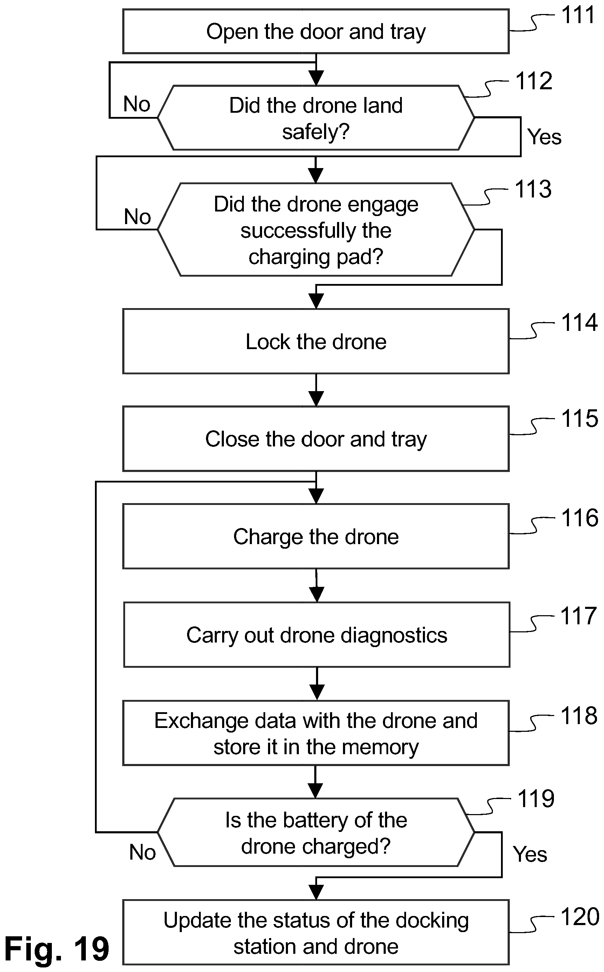

In step 74, it is determined whether or not there is a drone assigned to the docking station (or vice versa). In this example, only one drone can be assigned at a time to a given docking station. In the affirmative, the process continues in step 75, where the docking station determines whether or not the assigned drone 1 is requesting to take off. In the affirmative, the process continues in step 76, where drone undocking routine is performed as described in more detail in the flowchart of Figure 18. If the drone is not requesting to take off, then in step 77, the docking station determines whether or not the assigned drone 2 is requesting to land on the docking station 1. In the affirmative, then the process continues in step 78, where drone docking routine is performed as illustrated in more detail in the flowchart of Figure 19. After steps 76 and 78, the process continues in step 65. Furthermore, if in step 74 it was determined that no drone is assigned to the docking station, or if in step 77 it was determined that the drone is not requesting to land, then the process also continues in step 65. Moreover, if in step 69 it was determined that there is an allocator docking station in the network, or if in step 70 it was determined that the present docking station has no priority to become allocator, then the process continues in step 74.

The flowchart of Figure 16 describes the initialisation step or process of the flowchart of Figures 15a and 15b. In step 81, sensor calibrations are carried out. The sensors to be calibrated may include one more sensors of the weather sensing or servo control module 43. These sensors may include a temperature sensor, humidity sensor, pressure sensor, wind speed sensor and/or one or more encoders connected to the motors. In step 82, the docking station checks detailed system health, i.e., the health of the present docking station 1. It is to be noted that compared with step 64, in step 82, longer diagnostic tests can be applied since they will be performed only once (during initialisation). However, in step 64, usually the diagnostics step is very short, and only critical components are checked, such as the tray motor driver. In step 83, the docking station 1 connects to the wireless mesh network 4, and in step 84, the docking station connects to the internal wired mesh network of the docking array 3 the present docking station belongs to.

The flowchart of Figure 17 describes in more detail the allocation routine or process of step 72 of the flowchart of Figures 15a and 15b. In step 91, the docking station 1, which in this case is the allocator docking station, collects information about available tasks and optionally clusters a plurality of tasks if feasible and re-evaluates their priorities. The available unallocated tasks can be clustered if they fulfil one or more clustering criteria. For example, respective tasks can be clustered if these tasks are physically sufficiently close to each other and/or their desired completion time is timewise close to each other. In this case a plurality of tasks can be clustered or combined to be completed by a given drone. In step 92, the docking station 1 broadcasts information about the available tasks as clustered or unclustered, and information about the docking stations in the network. In step 93, the docking station 1 collects bids from the drones 2 of the network 4 for the available tasks and preferably for all the unassigned docking stations of the network. In step 94, the docking station 1 performs task and docking station allocations considering the lowest (or highest) value of the cost function in the bids. In step 95, the docking station broadcasts the drone and/or docking station allocations across the network 4. It is to be noted that in step 92, the docking station may additionally broadcast an announcement about the beginning of an auction and possibly also the length of the auction. In this case, in step 93, the docking station would collect the bids during a predefined time period. Alternatively, the auction could come to an end as soon as the available tasks and docking stations have been assigned to the drones.

The flowchart of Figure 18 describes the undocking routine or process of step 75 of the flowchart of Figures 15a and 15b. In step 101, it is determined whether or not it is safe for the drone to take off. In the affirmative, the drone is unlocked in step 102. This step involves controlling the locking mechanism 30 to unlock the drone. The locking mechanism 30 is in this case includes the electro-permanent magnet, the polarity of which is changeable, and where the polarity is optionally changeable by a voltage pulse. Thus, the drone can be unlocked by reversing polarity of the electro-permanent magnet. In step 103, the door 5 and tray 6 are opened. In step 104, it is determined whether or not the drone took off successfully. In the affirmative, the process continues in step 105, where the door and the tray are closed. If the drone did not take successfully, then this step is repeated. In step 106, the status of the docking status and drone is updated. Furthermore, if in this 101 it was determined that it is not safe for the drone to take off, then the process continues in step 106.

The flowchart of Figure 19 describes the docking routine or process of step 77 of the flowchart of Figures 15a and 15b. In step 111, the door 5 and tray 6 are opened. In step 112, it is determined whether or not the drone landed successfully. In this is not the case, then this step is repeated. In the affirmative, in step 113 it is determined whether or not electrical contacts of the drone 2 made a proper contact with corresponding electrical contacts of the charging pad 38. If this is not the case, then this step is repeated. In the affirmative, the process continues in step 114, where the drone is locked to the landing pad 7. This step involves controlling the locking mechanism 30 to lock the drone to the landing pad. More specifically, in this case polarity of the electro-permanent magnet is reversed. In step 115, the door 5 and the tray 6 are closed. In step 116, the battery of the drone is charged. In step 117, the docking station 1 carries out drone diagnostics. This step may involve for example determining the charge level of the drone battery. In step 118, the docking station exchanges data with the drone and saves the received data in the memory of the docking station. In step 119, it is determined whether or not the battery of the drone is charged or sufficiently charged. If this is not the case, then the charging is continued in step 116. If in step 119 it is determined that the battery is sufficiently charged, then in step 120, the status of the docking station 1 and the drone 2 is updated.

It is to be noted that the above-described processes are merely one possible implementation, but various variations are possible. Furthermore, the order of the steps may be different from the order presented above.

In today's rapidly evolving landscape, autonomous indoor or outdoor drone inspections are increasingly popular across various industries, with docking stations playing a critical role in their operation. The docking station's versatile design as herein proposed allows it to be used as a standalone product suitable for any application requiring the storage and self-charging of aerial robots. As was explained above, the proposed docking station 1 integrates advanced functionalities, such as charging, storage, transportation, real-time data exchange, and electro-mechanical stacking, leveraging robust hybrid communication networks for centralised and/or distributed control. Technical and commercial advantages include enhanced operational efficiency, reduced downtime, and applicability across diverse sectors, including logistics, agriculture, and infrastructure inspection. This versatile docking solution addresses the limitations of existing systems, paving the way for scalable, autonomous, and high-demand drone applications. Key application areas include large construction sites, the oil and gas industry, warehouses, vertical farms, factories, and other power plants. The versatility of the docking stations ensures their broad applicability and adaptability to diverse operational needs, making it an essential tool for enhancing the efficiency and autonomy of robotic operations across multiple sectors.

While the invention has been illustrated and described in detail in the drawings and foregoing description, such illustration and description are to be considered illustrative or exemplary and not restrictive, the invention being not limited to the disclosed embodiment. Other embodiments and variants are understood and can be achieved by those skilled in the art when carrying out the claimed invention, based on a study of the drawings, the disclosure and the appended claims. Further variants may be obtained by combining the teachings of any of the examples explained above.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An electro-mechanically stackable docking station (1) for a vertical take-off and landing aerial vehicle (2), the docking station (1) comprising:
- a housing (8) comprising a door (5);
- a tray mechanism (6) comprising a tray (6) configured to move between a retracted position, in which the tray is placed inside the housing, and an extended position, in which the tray (6) extends outside of the housing (8);
- a landing pad (7) on the tray (6) for the aerial vehicle (2);
- a data communication module (24) to allow the docking station (1) to set up a data communication link with the aerial vehicle (2) and/or with one or more other devices (1, 16, 17);
- a data processing unit (21) to process data;
- one or more mechanical coupling features (9) on the housing (8) to allow the docking station (1) to be mechanically coupled to one or more other docking stations (1) on one or more sides of the docking station (1); and
- one or more electrical connectors (14) and/or inductive pads (49) to allow the docking station (1) to be electrically connected to the one or more other docking stations (1).

2. The docking station (1) according to claim 1, wherein the one or more coupling features (9) are arranged on a plurality of sides of the housing (8) to allow a mechanical coupling to the one or more other docking stations (1) on a plurality of different sides of the docking station (1) to enable stacking in a plurality of orientations, wherein the orientations are optionally orthogonal or substantially orthogonal to each other.

3. The docking station (1) according to claim 1 or 2, wherein the docking station (1) further comprises one or more locking features (10) to allow the docking station (1) to mechanically lock with the one or more other docking stations (1).

4. The docking station (1) according to claim 3, wherein the one or more locking features (10) are clamps (10), wherein the clamps (10) are optionally rotating clamps (10).

5. The docking station (1) according to any one of the preceding claims, wherein the one or more coupling features (9) are arranged as female and/or male joints (9₁, 9₂).

6. The docking station (1) according to claim 5, wherein the female and/or male joints (9₁, 9₂) are pin joints (9) comprise a shaft (11) configured to be engaged in a respective hole on the housing (8), wherein the shaft (11) is optionally a threaded shaft to allow threaded coupling.

7. The docking station (1) according to any one of the preceding claims, wherein the landing pad (7) comprises a charging pad (38) embedded in the landing pad (7) for charging or discharging a power storage unit (36) of the aerial vehicle (2) through the charging pad (38), and wherein the charging pad (38) is configured to charge or discharge the power storage unit (36) conductively or inductively.

8. The docking station (1) according to any one of the preceding claims, wherein landing pad (7) comprises a locking mechanism (30) to lock the aerial vehicle (2) to the landing pad (7), wherein the locking mechanism (30) is optionally an electro-permanent magnet, the polarity of which is changeable, wherein the polarity is optionally changeable by a voltage pulse.

9. The docking station (1) according to any one of the preceding claims, wherein the outer surface of the housing (8) and/or the tray (6) comprise(s) one or more fiducial markers (50) to facilitate landing and/or take-off of the aerial vehicle (2).

10. The docking station (1) according to any one of the preceding claims, wherein the one or more electrical connectors (14) are arranged in one or more recessed cavities (15) on the housing (8), and/or wherein the respective inductive pad (49) comprises a primary coil and a secondary coil.

11. The docking station (1) according to any one of the preceding claims, wherein the landing pad (7) has a profiled surface designed to match a bottom surface profile of the aerial vehicle (2), compensating for any misalignment during landing of the aerial vehicle (2), and wherein the landing pad (7) is optionally replaceable to another landing pad to match another bottom surface profile of another aerial vehicle (2).

12. The docking station (1) according to any one of the preceding claims, wherein the docking station (1) further comprises at least one of the following: an ultra-wideband module (41) for assisting the aerial vehicle (2) when flying to measure its relative displacement with respect to the docking station (1) for precise positioning, a vision module (42) for monitoring the aerial vehicle (2) when docked to thereby enable diagnostics and detection of proper docking of the aerial vehicle (2), a weather sensing module (43), a range measurement module (44) for determining a vertical distance from the tray (6) in the extended position to objects above the tray (6), and a global navigation satellite system module (45).

13. A docking station array (3) comprising a plurality of docking stations (1) according to any one of the preceding claims mechanically coupled and electrically connected to one another.

14. A method of operating an electro-mechanically stackable docking station (1) for a vertical take-off and landing aerial vehicle (2) in a network (4) comprising aerial vehicles and docking stations, the docking station (1) comprising:
- a housing (8) comprising a door (5);
- a tray mechanism (6) comprising a tray (6) configured to move between a retracted position, in which the tray is placed inside the housing, and an extended position, in which the tray (6) extends outside of the housing (8);
- a landing pad (7) on the tray (6) for the aerial vehicle (2);
- a data communication module (24) to allow the docking station (1) to set up a data communication link with the aerial vehicle (2) and/or with one or more other devices (1, 16, 17);
- a data processing unit (21) to process data;
- one or more mechanical coupling features (9) on the housing (8) to allow the docking station (1) to be mechanically coupled to one or more other docking stations (1) on one or more sides of the docking station (1); and
- one or more electrical connectors (14) and/or inductive pads (49) to allow the docking station (1) to be electrically connected to the one or more other docking stations (1),
the method comprising:
- broadcasting (65) a status of the docking station (1) across the network (4);
- monitoring (67) respective statuses of the one or more other docking stations and aerial vehicles in the network (4);
- assigning (70) the docking station (1) as an allocator docking station if no other docking station has been designated as an allocator docking station to allow the docking station (2) to allocate tasks and docking stations to the aerial vehicles in the network (4).

15. The method according to claim 14, wherein the allocation is based on bids received from the aerial vehicles in the network (4), wherein the bids comprise a cost function value such that the lowest or highest cost function value among the bids in connection with a respective docking station or task is used to allocate the respective docking station or task to the aerial vehicle having the lowest or highest cost function value for the respective docking station or task, and wherein the cost function value is obtained based on one or more parameters characterising the aerial vehicle and the respective docking station or task.
